# EUROPEAN PATENT APPLICATION

(11) **EP 4 836 090 A1**
(43) Date of publication of application: **04.11.2026**
(21) Application number: 24910190.8
(22) Date of filing: 18.10.2024
(51) Int. Cl.: H01M 10/633, H01M 10/6568, H01M 10/6556, H01M 10/48, H01M 10/615, H01M 10/613

(54) **BATTERY ASSEMBLY AND TEMPERATURE CONTROL METHOD THEREFOR, ELECTRIC SYSTEM AND CONTROLLER**

(30) Priority: 25.12.2023 CN 202311800520
(71) Applicant: BYD Company Limited, Shenzhen, Guangdong 518118 (CN)
(72) Inventor: XIANG, Ying, Shenzhen, Guangdong 518118 (CN); SU, Bizhe, Shenzhen, Guangdong 518118 (CN); CAI, Yaomin, Shenzhen, Guangdong 518118 (CN); WANG, Qiang, Shenzhen, Guangdong 518118 (CN); PENG, Qingbo, Shenzhen, Guangdong 518118 (CN)
(74) Representative: Gunzelmann, Rainer
(86) International application number: PCT/CN2024/125940
(87) International publication number: WO 2025/139248

(57) **Abstract**

A battery assembly and a temperature control method therefor, an electric system and a controller. The battery assembly includes a battery and a temperature regulating assembly, wherein the temperature regulating assembly is arranged on one side of the battery to exchange heat with the battery, the temperature regulating assembly is arranged with a liquid flow plate which is arranged with a liquid flow channel, and the liquid flow channel is arranged with liquid inlets and a liquid outlet. The temperature control method includes: acquiring a maximum value tₘₐₓ and a minimum value tₘᵢₙ of the temperature of a battery; acquiring a difference △t of the maximum value tₘₐₓ and the minimum value tₘᵢₙ; and when the difference △t is greater than a first threshold △t₀, controlling a temperature regulating assembly to be in an on state, and controlling the liquid inlet temperature t_{b} of a liquid flow plate to meet: tₘᵢₙ <t_{b}<tₘₐₓ.

## Description

### CROSS-REFERENCE TO RELATED APPLICATIONS

The present disclosure claims priority to Chinese Patent Application No. 202311800520.6 filed on December. 25, 2023 entitled "BATTERY ASSEMBLY AND TEMPERATURE CONTROL METHOD THEREFOR, ELECTRIC SYSTEM AND CONTROLLER", which is incorporated herein by reference in its entirety.

### FIELD

The present disclosure relates to the field of batteries, and in particular, to a battery assembly, a temperature control method therefor, an electric system, and a controller.

### BACKGROUND

During the working process of the battery assembly, with the continuous decrease of temperature, the ohmic internal resistance and polarization internal resistance of the battery assembly increase to varying degrees, and the overall discharge voltage of the battery assembly is lower than that at normal temperature. When charging and discharging under low temperature conditions, the operating voltage of the battery assembly rises or falls faster than that at normal temperature, resulting in a significant reduction in the maximum usable capacity and power of the battery assembly. Therefore, working at low temperature will lead to a decline in the working performance of the battery assembly, and long-term exposure of the battery assembly to low temperature will also lead to a reduction in the life of the battery assembly, and even affect the safety of the battery assembly.

### SUMMARY

An object of the present disclosure is to provide a battery assembly, a temperature control method therefor, an electric system, and a controller therefor, to at least partially solve problems existing in the related art.

In order to achieve the above object, the present disclosure provides a temperature control method of a battery assembly, the battery assembly includes a battery and a temperature regulating assembly, wherein the temperature regulating assembly is arranged on one side of the battery to exchange heat with the battery, the temperature regulating assembly has a liquid flow plate, the liquid flow plate is arranged with a liquid flow channel for accommodating a liquid, and the liquid flow channel is arranged with a liquid inlet and a liquid outlet;

The temperature control method includes:
a maximum value tₘₐₓ and a minimum value tₘᵢₙ of the temperature of a battery is acquired;
a difference △t of the maximum value tₘₐₓ and the minimum value tₘᵢₙ is acquired;
when the difference △t is greater than a first threshold △t₀, a temperature regulating assembly is controlled to be in an on state, and a liquid inlet temperature t_{b} of the liquid flow plate is controlled to meet: tₘᵢₙ <t_{b}< tₘₐₓ, so as to regulate the temperature of the battery.

In an embodiment, in the step of the temperature regulating assembly is controlled to be in an on state and the liquid inlet temperature t_{b} of the liquid flow plate is controlled to meet: tₘᵢₙ < t_{b}< tₘₐₓ, so as to regulate the temperature of the battery ,the temperature control method includes:
A cooling liquid is controlled to enter the liquid flow plate, and the liquid inlet temperature t_{b} of the liquid flow plate meets: t_{b} = tₘᵢₙ + (tₘₐₓ - tₘᵢₙ) * α or t_{b} = tₘₐₓ -( tₘₐₓ - tₘᵢₙ) * α, wherein 0.2 ≤ α ≤ 0.8.

In an embodiment, the battery includes a first temperature zone and a second temperature zone, the liquid flow plate includes a first flow port and a second flow port, the first flow port is disposed correspondingly to the first temperature zone, and the second flow port is disposed correspondingly to the second temperature zone, wherein the temperature of the first temperature zone is greater than the temperature of the second temperature zone, in the step of the cooling liquid is controlled to enter the liquid flow plate, and the liquid inlet temperature t_{b} of the liquid flow plate meets: t_{b} = tₘᵢₙ + (tₘₐₓ - tₘᵢₙ) * α or t_{b} = tₘₐₓ -( tₘₐₓ - tₘᵢₙ) * α, wherein 0.2 ≤ α ≤ 0.8, the temperature control method includes:
The cooling liquid is controlled to enter from the first flow port, and the liquid inlet temperature t_{b} of the liquid flow plate is controlled to meet: t_{b} = tₘₐₓ -( tₘₐₓ - tₘᵢₙ) * α; or
The cooling liquid is controlled to enter from the second flow port, and the liquid inlet temperature t_{b} of the liquid flow plate is controlled to meet: t_{b} = tₘᵢₙ + (tₘₐₓ - tₘᵢₙ) * α.

In an embodiment, in the step of a maximum value tₘₐₓ and a minimum value tₘᵢₙ of the temperature of a battery is acquired, the temperature control method includes:
The acquired maximum value tₘₐₓ is a maximum value of the temperature in the first temperature zone, and the acquired minimum value tₘᵢₙ is a minimum value of the temperature in the second temperature zone.

In an embodiment, the temperature control method includes:
A number a of detection points having a temperature greater than a second threshold value t_{q} and a number b of detection points having a temperature less than a third threshold value tₚ are acquired to acquire a value of α, wherein the magnitude of α is negatively correlated with the value of a-b.

In an embodiment, the temperature control method includes:
Before the step of the difference △t of the maximum value tₘₐₓ and the minimum value tₘᵢₙ is acquired, comparing the minimum value tₘᵢₙ with a fourth threshold value t_{z}, the temperature regulating assembly is controlled to be in an off state if the minimum value tₘᵢₙ is greater than the fourth threshold value t_{z}, and the step of the difference △t between the maximum value tₘₐₓ and the minimum value tₘᵢₙ is acquired is performed if the minimum value tₘᵢₙ is less than or equal to the fourth threshold value t_{z}.

According to a second aspect of the present disclosure, the present disclosure provides a controller for implementing the above temperature control method of the battery assembly, so as to regulate the liquid inlet temperature of the liquid flow plate.

According to a third aspect of the present disclosure, the present disclosure provides a battery assembly using the above temperature control method of the battery assembly, the battery assembly includes:
A battery, and
A temperature regulating assembly, wherein the temperature regulating assembly is arranged on one side of the battery to exchange heat with the battery, the temperature regulating assembly has a liquid flow plate, the liquid flow plate is arranged with a liquid flow channel for accommodating a liquid, and the liquid flow channel is arranged with a liquid inlet and a liquid outlet;
In an embodiment, the battery includes a first temperature zone and a second temperature zone.

In an embodiment, the battery includes a cell, the cell has a main body and a pole located at an end in a length direction of the main body, the first temperature zone is located at the pole, the second temperature zone is located at the main body, and the battery assembly further includes a plurality of temperature detection elements, and the plurality of temperature detection elements are arranged on the pole and the main body, respectively.

In an embodiment, the battery includes a plurality of the cells, the plurality of the cells are arranged in a width direction, and the plurality of temperature detection elements are arranged at least on the main body of the cells located at an end and on the pole of at least one cell.

In an embodiment, the liquid flow channel includes a first flow channel zone and a second flow channel zone communicating with each other, the first flow channel zone includes a plurality of first flow channels communicating with each other, the second flow channel zone includes a plurality of second flow channels communicating with each other, the first flow channel is in communication with the liquid inlet, the second flow channel is in communication with the liquid outlet, and an extension direction of the first flow channel and the second flow channel is identical to a width direction of the battery.

In an embodiment, the first flow channels are respectively disposed at positions close to the pole, and the second flow channels are disposed at positions away from the pole.

In an embodiment, a flow channel exchange portion is connected between the first flow channel and the second flow channel, and the flow channel exchange portion includes a plurality of protrusions arranged at intervals, configured to converge liquid from the plurality of first flow channels and then distribute the liquid.

In an embodiment, the temperature regulating assembly includes a heating film disposed at least at one end of the battery in a height direction, and the heating film is bonded to the battery.

In an embodiment, the heating film includes a plurality of mutually independent membrane units.

In an embodiment, the battery assembly is a self-heating battery.

According to a fourth aspect of the present disclosure, the present disclosure provides an electric system including the battery assembly described above.

According to the above technical solution, the temperature regulating assembly can timely regulate the temperature of the battery assembly according to the temperature difference between the maximum value tₘₐₓ and the minimum value tₘᵢₙ of the battery, and can ensure the working performance of the battery assembly by maintaining the temperature of the battery assembly, and improve the safety of use of the battery assembly under the condition of increasing the temperature rising rate of the battery assembly and reducing energy consumption.

Other features and advantages of the present disclosure will be described in detail in the following detailed description section.

### BRIEF DESCRIPTION OF THE DRAWINGS

The accompanying drawings are intended to provide a further understanding of the present disclosure and constitute a part of the specification, and together with the following detailed description, serve to explain the present disclosure, but are not intended to limit the present disclosure. In the drawings:
FIG. 1 is a schematic diagram of a battery assembly according to an embodiment of the present disclosure.
FIG. 2 is a schematic diagram of a battery of a battery assembly according to an embodiment of the present disclosure.
FIG. 3 is a schematic diagram of a liquid flow plate of a battery assembly according to an embodiment of the present disclosure.
FIG. 4 is a schematic diagram of a heating film of a battery assembly according to an embodiment of the present disclosure.
FIG. 5 is a schematic diagram of an electric system according to an embodiment of the present disclosure.
FIG. 6 is a flowchart of a temperature control method of a battery assembly according to an embodiment of the present disclosure.
FIG. 7 is a flowchart of a temperature control method of a battery assembly according to another embodiment of the present disclosure.

### Description of Reference Numbers

1-battery assembly; 11-battery ;1101-first temperature zone; 1102- second temperature zone; 111-pole ;112 main body; 113 cell ;12-temperature detection element 2- liquid flow plate; 21-liquid flow channel 2101-first flow port; 2102-second flow port; 2103- first flow channel zone; 2104-second flow channel zone; 211-fluid inlet ;212-liquid outlet ;213-first flow channel; 214-second flow channel; 215-protrusion;216-flow channel exchange portion 3-heating film; 31-membrane unit ;4-temperature regulating assembly; 5-controller; 6-electric system.

### DETAILED DESCRIPTION

Hereinafter, specific embodiments of the present disclosure will be described in detail with reference to the accompanying drawings. It should be understood that the detailed description described herein is for illustration and explanation of the present disclosure only, and is not intended to limit the present disclosure.

In the present disclosure, unless stated to the contrary, the location words used such as "upper" and "lower" are defined according to the actual arrangement state of the battery assembly, and the location words used such as "inner" and "outer" are defined with respect to the outline of the corresponding component. The terms "first, second," and the like are used for the purpose of distinguishing different components, and are not sequential or important. Further, in the following description, when referring to the drawings, the same reference numerals in different drawings denote the same or similar elements unless otherwise explained.

According to an embodiment of the present disclosure, a battery assembly 1 including a battery 11 and a temperature regulating assembly 4 is provided, wherein the temperature regulating assembly 4 is arranged on one side of the battery 11 to exchange heat with the battery 11, and the temperature regulating assembly 4 has a liquid flow plate 2, the liquid flow plate 2 is arranged with a liquid flow channel 21 for accommodating a liquid, and the liquid flow channel 21 is arranged with a liquid inlet 211 and a liquid outlet 212.

According to the above technical solution, the temperature regulating assembly 4 can timely regulate the temperature of the battery assembly 1 according to the temperature difference between the maximum value tₘₐₓ and the minimum value tₘᵢₙ of the battery 11, and can ensure the working performance of the battery assembly 1 by maintaining the temperature of the battery assembly 1 , and improve the safety of use of the battery assembly 1 under the condition of increasing the temperature rising rate of the battery assembly and reducing energy consumption.

Further, the battery 11 may include a first temperature zone 1101 and a second temperature zone 1102, and the temperature of the first temperature zone 1101 may be greater than the temperature of the second temperature zone 1102, or may be partially greater than the temperature of the second temperature zone 1102, which is not limited by the present disclosure. The battery 11 may include a cell 113, and the cell 113 may have a main body 112 and a pole 111 located at the end of the main body 112 in a length direction. Taking the temperature of the first temperature zone 1101 is greater than the temperature of the second temperature zone 1102 as an example, the first temperature zone 1101 may be located at the pole 111 and the second temperature zone 1102 may be located at the main body 112.The battery assembly 1 may also include a plurality of temperature detection elements 12, the plurality of temperature detection elements 12 are arranged on the pole 111 and the main body 112 respectively, so as to perform multi-point and multi-zone temperature collection at different positions of the battery 11, improve the temperature collection accuracy, and facilitate the temperature regulating assembly 4 to regulate the temperature of the battery 11 in time, thereby ensuring the working performance and safety of the battery assembly 1.

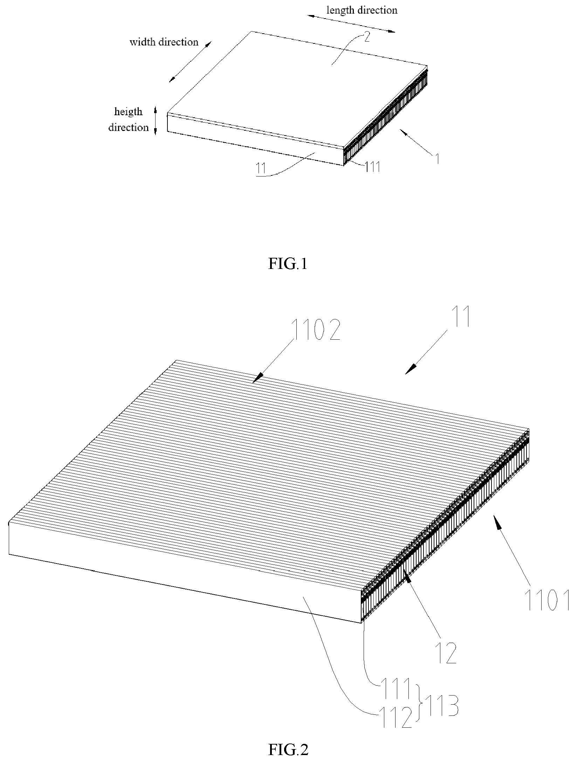

Further, as shown in FIG. 1 and FIG.2, the battery 11 may include a plurality of cells 113, the plurality of cells 113 are arranged in the width direction, the battery 11 is formed by the plurality of cells 113, and the temperatures of the plurality of cells 113 at the same position in the arrangement direction of the cells 113 are relatively close, so the plurality of temperature detection elements 12 may be arranged at least on the main body 112 of the cells 113 located at the end and on the pole 111 of at least one cell 113, so as to perform multi-point and multi-zone temperature collection at different positions of the battery 11, improve the temperature collection accuracy, and facilitate the temperature regulating assembly 4 to regulate the temperature of the battery 11 in time, thereby ensuring the working performance and safety of the battery assembly 1. Further, according to an embodiment of the present disclosure, the plurality of temperature detection elements 12 may be arranged on the pole 111 side of the battery 11 and the middle portion of the battery 11.

According to an embodiment of the present disclosure, as shown in FIG. 1 and FIG. 2, each cell 113 extends in the length direction, and the poles 111 are located at both ends of the cell 113 in the length direction. The middle portions of the plurality of cells 113 are arranged in a width direction to form the middle portion of the battery 11. That is, the first temperature zone 1101 and the second temperature zone 1102 of the battery 11 are formed.

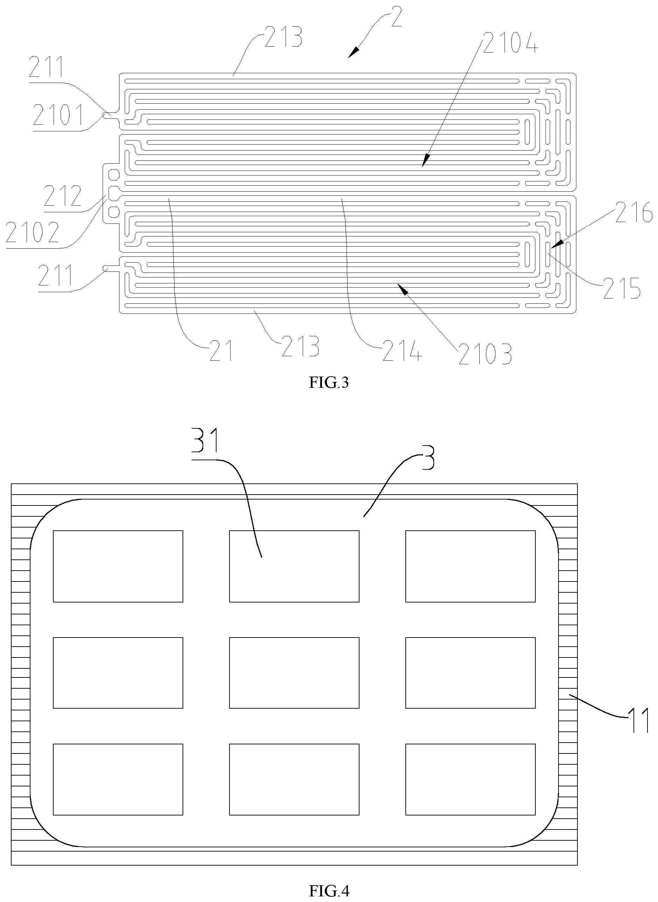

According to an embodiment of the present disclosure, as shown in FIG. 1 and FIG. 3, the liquid flow plate 2 may be arranged at least at one end of the battery 11 in the height direction, and the liquid flow plate 2 may be sealed and attached to the outer wall of the battery 11 and a liquid flow channel 21 for accommodating a liquid may be formed between the liquid flow plate 2 and the battery 11, or the liquid flow channel 21 which is not in direct contact with the battery 11 may be directly formed in the liquid flow plate 2 itself, but the present disclosure is not limited thereto. The liquid flow channel 21 may be arranged as a linear flow channel or a serpentine flow channel, but the present disclosure is not limited thereto, and the liquid inlet 211 and the liquid outlet 212 may be arranged on the same side or on different sides, and the present disclosure is also not limited thereto.

Further, the liquid flow plate 2 has a first flow channel port 2101 and a second flow channel port 2102, the first flow channel port 2101 is disposed correspondingly to the first temperature zone 1101, and the second flow channel port 2102 is disposed correspondingly to the second temperature zone 1102. Based on the specific liquid flow direction requirement, the liquid can enter from the first flow port 2101 and exit from the second flow port 2102, where the first flow port 2101 is the liquid inlet port 211 of the liquid flow plate 2, and the second flow port 2102 is the liquid outlet port 212 of the liquid flow plate 2. In addition, the liquid can enter from the second flow port 2102 and exit from the first flow port 2101, where the first flow port 2101 is the liquid outlet port 212 of the liquid flow plate 2, and the second flow port 2102 is the liquid inlet port 211 of the liquid flow plate 2.

Further, as shown in FIG. 1 and FIG. 3, the liquid flow channel 21 may include a first flow channel zone 2103 and a second flow channel zone 2104 communicating with each other, and the first flow channel zone 2103 may include a plurality of first flow channels 213 communicating with each other, and the second flow channel zone 2104 may include a plurality of second flow channels 214 communicating with each other, the first flow channel 213 is in communication with the liquid inlet 211, the second flow channel 214 is in communication with the liquid outlet 212, and the extension direction of the first flow channel 213 and the second flow channel 214 is identical to the width direction of the battery 11. In this way, the liquid in each of the first flow channels 213 and the second flow channels 214 can flow through the plurality of cells 113, and when the temperature of the battery 11 is uneven, the liquid absorbs heat when flowing through the high temperature portion and dissipates heat when flowing through the low temperature portion, and during the flow process, the heat of the high temperature zone of the battery 11 is transferred to the low temperature zone of the battery 11, which contributes to averaging the temperature of the battery 11. In addition, since the positions through which the plurality of first flow channels 213 flow may have different temperatures, the temperature between the plurality of first flow channels 213 may be uneven, and a flow channel exchange portion 216 may be connected between the first flow channel 213 and the second flow channel 214. The flow channel exchange portion 216 includes a plurality of protrusions 215 arranged at intervals, configured to converge liquid from the plurality of first flow channels 213 and then distribute the liquid, so as to achieve the purpose of averaging the temperature of the liquid after the convergence of the different first flow channels 213, the temperature averaged liquid is then distributed into the second flow channel 214, and the temperature of the liquid at the inlet of the plurality of second flow channels 214 is unified to the maximum extent, thereby further averaging the temperature of the liquid and reducing the temperature difference of the battery assembly.

Further, since the temperature of the position of the pole 111 is usually higher than the temperature of the middle portion of the battery 11, the first flow channels 213 are respectively disposed at positions close to the pole 111, and the second flow channels 214 are disposed at positions away from the pole 111. The first flow channel 213 first flows through the pole 111 and then absorbs heat, and then flows into the second flow channel 214 and then releases heat, thereby achieving the purpose of lowering the temperature at the pole 111 and raising the temperature of the middle portion of the battery 11.

Further, since the temperature of the position of the pole 111 is usually higher than the temperature of the middle portion of the battery 11, the first flow channel 213 may be arranged at a position close to the pole 111, and the second flow channel 214 may be arranged at a position away from the pole 111, respectively. The first flow channel 213 first flows through the pole 111 and then absorbs heat, and then flows into the second flow channel 214 and then releases heat, thereby achieving the purpose of lowering the temperature at the pole 111 and raising the temperature of the middle portion of the battery 11.

According to another embodiment of the present disclosure, as shown in FIG. 4, the temperature regulating assembly 4 may include a heating film 3 arranged at least at one end of the battery 11 in the height direction, and the heating film 3 may be bonded to the battery 11. When the temperature difference of the battery 11 is too large, the heating film 3 may be turned on to heat the battery 11 to increase the temperature of the battery assembly 1. The heating film 3 may include a plurality of mutually independent membrane units 31, and when the temperature difference of the battery assembly 1 is too large, the membrane units 31 in the low temperature zone can be heated separately, thereby heating the low temperature zone while ensuring the temperature of the high temperature zone, achieving precise control of the temperature difference of the battery assembly 1, and reducing the influence of temperature regulating on the high temperature zone.

It should be noted that the battery assembly 1 may be a self-heating battery, and when the overall temperature of the battery assembly 1 is too low, the self-heating may be started first to increase the overall temperature of the battery assembly 1.

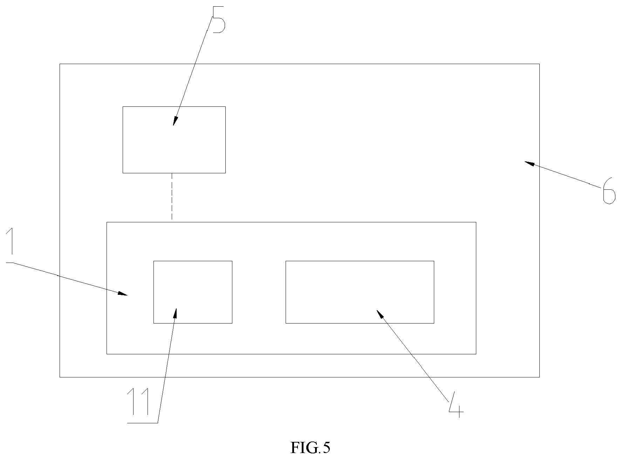

On the basis of the above solution, referring to FIG. 5, the present disclosure further provides an electric system 6, the electric system 6 includes the above battery assembly 1, and the electric system 6 has all the beneficial effects of the above battery assembly 1, and will not be repeatedly described here.

Due to the structural characteristics of the battery assembly 1 itself, during the self-heating and charging and discharging process, the current density near the pole 111 is larger than that of other zones, and the temperature rising rate near the pole 111 is significantly higher than that of the main body of the battery assembly 1, resulting in a high temperature near the pole 111 located at both ends of the battery 11 and a low temperature of the main body in the middle of the battery 11 during the self-heating or charging and discharging process, and both the temperature rising rate and temperature uniformity need to be improved.

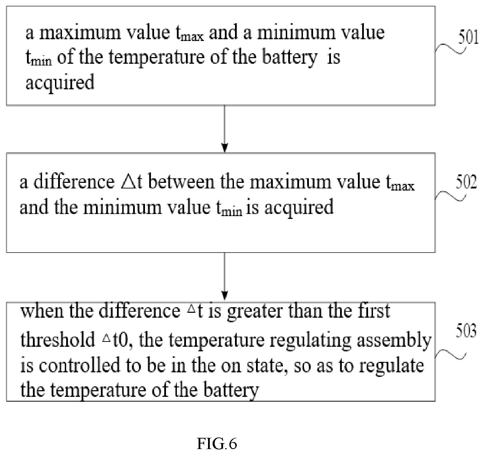

Specifically, in view of the problem that the temperature difference of the battery assembly 1 is large due to self-heating or charging and discharging of the battery assembly 1, a temperature control method of the battery assembly 1 is provided. As shown in FIG. 6, the above battery assembly 1 may use the following temperature control method, and the temperature control method includes step 501, that is, a maximum value tₘₐₓ and a minimum value tₘᵢₙ of the temperature of the battery 11 is acquired, wherein the maximum value tₘₐₓ and the minimum value tₘᵢₙ can be acquired by collecting and summarizing the real time temperature of the plurality of temperature detection elements 12. After the real time temperatures of the plurality of temperature detection elements 12 are counted, two extreme values are acquired, and step 502 is performed to acquire the difference △t between the maximum value tₘₐₓ and the minimum value tₘᵢₙ. The control section of the battery assembly 1 may first preset a first threshold value △t₀, after the difference △t is acquired, step 503 is performed, and when the difference △t is greater than the first threshold △t₀, the temperature regulating assembly 4 is controlled to be in an on state, so as to regulate the temperature of the battery 11, and the working performance of the battery assembly 1 is ensured by maintaining the temperature of the battery assembly 1, thereby improving the use safety of the battery assembly 1. In the process of temperature regulating, the temperatures of the plurality of temperature detection elements 12 can be detected in real time and the maximum value tₘₐₓ and the minimum value tₘᵢₙ can be counted in real time. When the difference △t between the two is less than or equal to the first threshold △t₀, the temperature control assembly 4 can be controlled to turn off . In the acquisition of the maximum value tₘₐₓ and the minimum value tₘᵢₙ, the acquired maximum value tₘₐₓ may be the maximum value of the temperature in the first temperature zone 1101 mentioned below, and the acquired minimum value tₘᵢₙ may be the minimum value of the temperature in the second temperature zone 1102 mentioned below, and the present disclosure is not limited thereto.

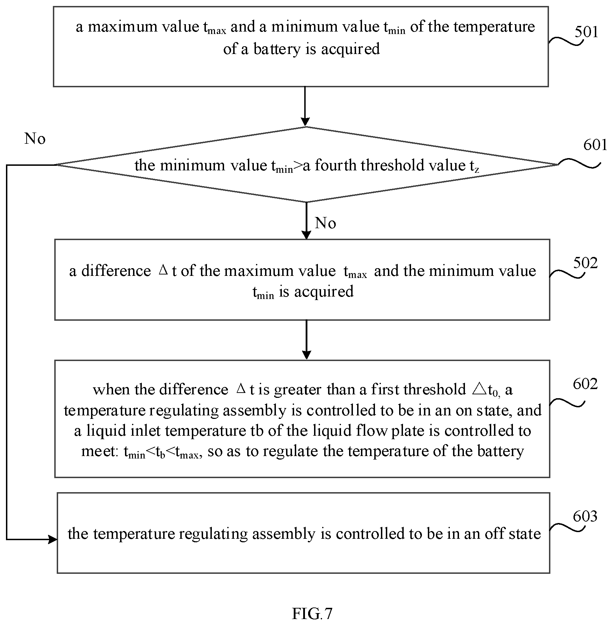

Further, as shown in FIG. 7, when the temperature regulating assembly 4 includes the liquid flow plate 2 mentioned above, in the step of the temperature regulating assembly 4 is controlled to be in an on state to heat the battery 11, the temperature control method may further include step 602, that is, when the difference △t is greater than the first threshold △t₀, the temperature regulating assembly 4 is controlled to be in the on state, and the liquid inlet temperature t_{b} of the liquid flow plate 2 is controlled to meet: tₘᵢₙ < t_{b}< tₘₐₓ, so as to regulate the temperature of the battery 11. In this way, the liquid in the flow plate 2 can absorb the heat of the battery assembly 1 in the high temperature zone of the battery assembly 1, and release the heat to the battery assembly 1 in the low temperature zone of the battery assembly 1, so that the temperature of the high temperature zone of the battery assembly 1 decreases and the temperature of the low temperature zone increases, and the temperature difference of the battery assembly 1 is reduced from two aspects. Since the temperature rising rate is determined by the zone where the temperature rising is lowest, the temperature rising rate of the battery 11 also increases significantly, and the control time is shortened.

In the step of the temperature regulating assembly 4 is controlled to be in the on state and the liquid inlet temperature t_{b} of the liquid flow plate 2 is controlled to meet: tₘᵢₙ < t_{b} < tₘₐₓ, and the temperature of the battery 11 is regulated, the temperature control method may further includes: the cooling liquid is controlled to enter the liquid flow plate 2 , so as to regulate the temperature of the battery 11. At this time, the liquid inlet temperature t_{b} of the liquid flow plate 2 can meet: t_{b}= tₘᵢₙ + (tₘₐₓ - tₘᵢₙ) * α or t_{b} = tₘₐₓ -( tₘₐₓ - tₘᵢₙ) * α, where 0.2 ≤ α ≤ 0.8, to ensure the liquid inlet temperature is between the maximum value and the minimum value, and thus the liquid inlet temperature of the liquid flow plate 2 can be more accurately regulated and the overall regulating time can be shortened.

Here, in a scheme in which the battery 11 includes the first temperature zone 1101 and the second temperature zone 1102, the temperature of the first temperature zone 1101 may be greater than the temperature of the second temperature zone 1102, in the step of the cooling liquid is controlled to enter the liquid flow plate 2, and the liquid inlet temperature t_{b} of the liquid flow plate 2 meets: t_{b}= tₘᵢₙ + (tₘₐₓ - tₘᵢₙ) * α or t_{b} = tₘₐₓ -( tₘₐₓ - tₘᵢₙ) * α, wherein 0.2 ≤ α ≤ 0. 8, the temperature control method may further includes: the cooling liquid is controlled to enter from the first flow port 2101, and the liquid inlet temperature t_{b} of the liquid flow plate 2 is controlled to meet: t_{b}= tₘᵢₙ + (tₘₐₓ - tₘᵢₙ) * α, that is, the cooling liquid is controlled to enter the liquid flow plate 2 from the liquid inlet port 211 of the liquid flow plate 2 corresponding to the first temperature zone 1101, the liquid inlet temperature t_{b} of the liquid flow plate 2 meets: t_{b} = tₘₐₓ -( tₘₐₓ - tₘᵢₙ) * α, the cooling liquid can flow out of the liquid flow plate 2 from the liquid outlet 212 of the liquid flow plate 2 corresponding to the second temperature zone 1102; or the cooling liquid is controlled to enter from the second flow port 2102, and the liquid inlet temperature t_{b} of the liquid flow plate 2 is controlled to meet: t_{b}= tₘᵢₙ + (tₘₐₓ - tₘᵢₙ) * α, that is, the cooling liquid is controlled to enter the liquid flow plate 2 from the liquid inlet port of the liquid flow plate 2 corresponding to the second temperature zone 1102, the liquid inlet temperature t_{b} of the liquid flow plate 2 meets: t_{b}= tₘᵢₙ + (tₘₐₓ - tₘᵢₙ)*α, the cooling liquid can flow out of the liquid flow plate 2 from the liquid outlet 212 of the liquid flow plate 2 corresponding to the first temperature zone 1101, so as to realize the circulation of the cooling liquid in the flow plate 2, thereby improving the temperature uniformity of the battery.

Specifically, when the first temperature zone 1101 is located at the pole 111, the second temperature zone 1102 is located at the main body 112, and the liquid flow plate 2 includes a first flow channel 213 and a second flow channel 214, and the first flow channel 213 corresponds to the first temperature zone 1101, and the second flow channel 214 corresponds to the second temperature zone 1102, the cooling liquid can be controlled to enter the liquid flow plate 2 from the first flow channel 213 and flow out of the liquid flow plate 2 from the second flow channel 214, the liquid inlet temperature t_{b} of the liquid flow plate 2 meets: t_{b}= tₘᵢₙ + (tₘₐₓ - tₘᵢₙ) *α. Since the difference between the temperature value of the high temperature zone (first temperature zone 1101) and the temperature value of t_{b} is large, and thus that the heat exchange between the battery portion corresponding to the high temperature zone (first temperature zone 1101) and the cooling liquid in the flow channel can be accelerated, thereby increasing the cooling rate of the high temperature zone to shorten the temperature difference with the low temperature zone (second temperature zone 1102), and further shortening the temperature equalization time between the low temperature zone and the high temperature zone of the battery. Or the cooling liquid can be controlled to enter the liquid flow plate 2 from the second flow channel 214 and flow out of the liquid flow plate 2 from the first flow channel 213, the liquid inlet temperature t_{b} of the liquid flow plate 2 meets: t_{b} = tₘₐₓ -( tₘₐₓ - tₘᵢₙ)*α. Since the difference between the temperature value of the low temperature zone (second temperature zone 1102) and the temperature value of t_{b} is large, and thus that the heat exchange between the battery portion corresponding to the low temperature zone (second temperature zone 1102) and the cooling liquid in the flow channel can be accelerated, thereby increasing the cooling rate of the low temperature zone to shorten the temperature difference with the high temperature zone (first temperature zone 1101), and further shortening the temperature equalization time between the low temperature zone and the high temperature zone of the battery. Here, 0.2 ≦ α ≦ 0. 8, and the present disclosure is not limited thereto.

It should be noted that, a second threshold t_{q} and a third threshold tₚ may be set, the second threshold t_{q} is larger than the third threshold tₚ, wherein a zone with a temperature higher than the second threshold t_{q} is a high temperature zone, and a zone with a temperature lower than the third threshold tₚ is a low temperature zone, and a number a of detection points having a temperature higher than the second threshold t_{q} and a number b of detection points having a temperature lower than the third threshold tₚ may be acquired to acquire a value of α, wherein the magnitude of α is negatively correlated with a value of a-b. The negative correlation here means that the larger the value of a-b is, which means that the more high temperature zones and less low temperature zones the battery assembly 1 has, at this time, the smaller the value of α is, the more biased to 0.2, and the smaller the value of a-b is, which means that the less high temperature zones and more low temperature zones the battery assembly 1 has, at this time, the larger the value of α is, the more biased to 0.8. The setting of this formula can further improve the efficiency of balancing the temperature difference of battery assembly 1, that is, the value of α can be determined based on the area of the low temperature zone and the entire temperature zone. Furthermore, in order to ensure that the temperature averaging time is shortened, the value of α is regulated according to the area ratio of the high and low temperature zones, so as to ensure the accuracy of temperature control, so as to reduce the temperature difference between both the temperature in the low temperature zone and the temperature in the high temperature zone and the equilibrium temperature as soon as possible, thereby shortening the temperature averaging time. The formula related to the value of α may be set in real time according to the actual situation, or a plurality of values may be taken at intervals in the range of 0.2 to 0.8, and each value corresponds to a different range of numerical values of a-b, and he present disclosure is not limited thereto.

According to an embodiment of the present disclosure, before the step of the difference △t between the maximum value tₘₐₓ and the minimum value tₘᵢₙ is acquired, as shown in FIG. 7, step 601 may be performed first, the minimum value tₘᵢₙ and the fourth threshold value t_{z} are compared, if the minimum value tₘᵢₙ is greater than the fourth threshold value t_{z}, at this time, the temperature of the battery assembly 1 does not affect the low temperature zone of the battery assembly 1, and there is no need to additionally heat the battery assembly 1, step 603 may be performed, the temperature regulating assembly 4 is controlled to be in an off state to save energy consumption. If the minimum value tₘᵢₙ is less than or equal to the fourth threshold value t_{z}, step 502 is performed, that is, the step of the difference △t between the maximum value tₘₐₓ and the minimum value tₘᵢₙ is acquired.

On the basis of the above solution, the present disclosure also provides a controller 5, the controller 5 is used for implementing the steps of the above temperature control method of the battery assembly 1 to regulate the liquid inlet temperature of the liquid flow plate 2, which will not be repeatedly described here.

Preferred embodiments of the present disclosure have been described in detail above with reference to the accompanying drawings, but the present disclosure is not limited to the specific details in the above-described embodiments, and various simple modifications can be made to the technical solutions of the present disclosure within the scope of the technical concept of the present disclosure, and these simple modifications all fall within the scope of protection of the present disclosure.

In addition, it should be noted that the specific technical features described in the above-described detailed embodiments can be combined in any suitable manner without contradiction, and in order to avoid unnecessary repetition, various possible combinations will not be described separately in the present disclosure.

In addition, various different embodiments of the present disclosure may be arbitrarily combined, and the same should be regarded as the contents disclosed in the present disclosure as long as they do not violate the concept of the present disclosure.

## Claims

1. A temperature control method of a battery assembly (1), the battery assembly (1) comprising a battery (11) and a temperature regulating assembly (4), the temperature regulating assembly (4) being arranged on one side of the battery (11) to exchange heat with the battery (11), the temperature regulating assembly (4) having a liquid flow plate (2), the liquid flow plate (2) being arranged with a liquid flow channel (21) for accommodating a liquid, and the liquid flow channel (21) being arranged with a liquid inlet (211) and a liquid outlet (212);
the temperature control method comprising:
acquiring a maximum value tₘₐₓ and a minimum value tₘᵢₙ of the temperature of the battery (11);
acquiring a difference △t between the maximum value tₘₐₓ and the minimum value tₘᵢₙ;
when the difference △t being greater than a first threshold △t₀, controlling the temperature regulating assembly (4) to be in an on state, and controlling a liquid inlet temperature t_{b} of the liquid flow plate (2) to meet: tₘᵢₙ< t_{b}< tₘₐₓ, so as to regulate the temperature of the battery (11).

2. The temperature control method of the battery assembly (1) according to claim 1, wherein in the step of controlling the temperature regulating assembly (4) to be in an on state and controlling the liquid inlet temperature t_{b} of the liquid flow plate (2) to meet: tₘᵢₙ< t_{b}< tₘₐₓ , so as to regulate the temperature of the battery (11), the temperature control method comprises:
controlling a cooling liquid to enter the liquid flow plate (2), and the liquid inlet temperature t_{b} of the liquid flow plate (2) meeting: t_{b}= tₘᵢₙ+ (tₘₐₓ-tₘᵢₙ) * α or t_{b}= tₘₐₓ-(tₘₐₓ-tₘᵢₙ) * α, wherein 0.2 ≤ α ≤ 0.8.

3. The temperature control method of the battery assembly (1) according to claim 2, wherein the battery (11) comprises a first temperature zone (1101) and a second temperature zone (1102), and the liquid flow plate (2) has a first flow port (2101) and a second flow port (2102), and the first flow port (2101) is disposed correspondingly to the first temperature zone (1101), and the second flow port (2102) is disposed correspondingly to the second temperature zone (1102), and the temperature of the first temperature zone (1101) is greater than the temperature of the second temperature zone (1102), in the step of controlling a cooling liquid to enter the liquid flow plate (2), and the liquid inlet temperature t_{b} of the liquid flow plate (2) meeting: t_{b}= tₘᵢₙ+ (tₘₐₓ-tₘᵢₙ) * α or t_{b}= tₘₐₓ-(tₘₐₓ-tₘᵢₙ) * α, wherein 0.2 ≤ α ≤ 0.8, the temperature control method comprises:
controlling the cooling liquid to enter from the first flow port (2101), and controlling the liquid inlet temperature t_{b} of the liquid flow plate (2) to meet: t_{b}= tₘₐₓ-(tₘₐₓ-tₘᵢₙ) * α; or
controlling the cooling liquid to enter from the second flow port (2102), and controlling the liquid inlet temperature t_{b} of the liquid flow plate (2) to meet: t_{b}= tₘᵢₙ+ (tₘₐₓ-tₘᵢₙ) * α.

4. The temperature control method of the battery assembly (1) according to claim 3, wherein in the step of acquiring the maximum value tₘₐₓ and the minimum value tₘᵢₙ of the temperature of the battery (11), the temperature control method comprises:
the acquired maximum value tₘₐₓ is a maximum value of the temperature in the first temperature zone (1101), and the acquired minimum value tₘᵢₙ is a minimum value of the temperature in the second temperature zone (1102).

5. The temperature control method of the battery assembly (1) according to any one of claims 2 to 4, wherein the temperature control method comprises:
a number a of detection points having a temperature greater than a second threshold value t_{q} and a number b of detection points having a temperature less than a third threshold value tₚ are acquired to acquire a value of α, wherein the magnitude of α is negatively correlated with the value of a-b.

6. The temperature control method of the battery assembly (1) according to any one of claims 1 to 5, wherein the temperature control method comprises:
before the step of acquiring the difference △t between the maximum value tₘₐₓ and the minimum value tₘᵢₙ, comparing the minimum value tₘᵢₙ with a fourth threshold value t_{z}, controlling the temperature regulating assembly (4) to be in an off state if the minimum value tₘᵢₙ is greater than the fourth threshold value t_{z}, and performing the step of acquiring the difference △t between the maximum value tₘₐₓ and the minimum value tₘᵢₙ if the minimum value tₘᵢₙ is less than or equal to the fourth threshold value t_{z}.

7. A controller (5), the controller (5) being used for implementing the temperature control method of the battery assembly (1) according to any one of claims 1 to 6, so as to regulate the liquid inlet temperature of the liquid flow plate (2).

8. A battery assembly (1), the battery assembly (1) using the temperature control method of the battery assembly (1) according to any one of claims 1 to 6, the battery assembly (1) comprising:
a battery (11), and
a temperature regulating assembly (4), the temperature regulating assembly (4) being arranged on one side of the battery (11) to exchange heat with the battery (11), the temperature regulating assembly (4) having a liquid flow plate (2), the temperature regulating assembly (4) being arranged with a liquid flow channel (21) for accommodating a liquid, and the liquid flow channel (21) being arranged with a liquid inlet (211) and a liquid outlet (212).

9. The battery assembly (1) according to claim 8, wherein the battery (11) comprises the first temperature zone (1101) and the second temperature zone (1102).

10. The battery assembly (1) according to claim 8 or 9, wherein the battery (11) comprises a cell (113), the cell (113) has a main body (112) and a pole (111) located at an end of the main body (112) in a length direction, the first temperature zone (1101) is located at the pole (111) and the second temperature zone (1102) is located at the main body (112), and the battery assembly (1) further comprises a plurality of temperature detection elements (12), the plurality of temperature detection elements (12) are arranged on the pole (111) and the main body (112), respectively.

11. The battery assembly (1) according to claim 10, wherein the battery (11) comprises a plurality of the cells (113), the plurality of cells (113) are arranged in a width direction, and the plurality of temperature detection elements (12) are arranged at least on the main body (112) of the cells (113) located at an end and on the pole (111) of at least one cell.

12. The battery assembly (1) according to any one of claims 8 to 11, wherein the liquid flow channel (21) comprises a first flow channel zone (2103) and a second flow channel zone (2104) communicating with each other, the first flow channel zone (2103) comprises a plurality of first flow channels (213) communicating with each other, the second flow channel zone (2104) comprises a plurality of second flow channels (214) communicating with each other, the first flow channel (213) is in communication with the liquid inlet (211), the second flow channel (214) is in communication with the liquid outlet (212), and the extension direction of the first flow channel (213) and the second flow channel (214) is identical to a width direction of the battery (11).

13. The battery assembly (1) according to claim 12, wherein the first flow channels (213) are respectively disposed at positions close to the pole (111), and the second flow channels (214) are disposed at positions away from the pole (111).

14. The battery assembly (1) according to claim 12 or 13, wherein a flow channel exchange portion (216) is connected between the first flow channel (213) and the second flow channel (214), and the flow channel exchange portion (216) includes a plurality of projections (215) arranged at intervals, configured to converge liquid from the plurality of first flow channels (213) and then distribute the liquid.

15. The battery assembly (1) according to any one of claims 8 to 14, wherein the temperature regulating assembly (4) comprises a heating film (3) disposed at least at one end of the battery (11) in a height direction, and the heating film (3) is bonded to the battery (11).

16. The battery assembly (1) according to claim 15, wherein the heating film (3) comprises a plurality of mutually independent membrane units (31).

17. The battery assembly (1) according to any one of claims 8 to 16, wherein the battery assembly (1) is a self-heating battery.

18. An electric system (6) comprising the battery assembly (1) according to any one of claims 8 to 17.
